(19) Europäisches Patentamt
European Patent Office
Office européen des brevets

(11) **EP 4 239 296 A1**

(12) **EUROPEAN PATENT APPLICATION**

(43) Date of publication:
**06.09.2023 Bulletin 2023/36**

(21) Application number: **22160161.0**

(22) Date of filing: **04.03.2022**

(51) International Patent Classification (IPC):
***G01D 5/241*** *(2006.01)*

(52) Cooperative Patent Classification (CPC):
**G01D 5/2415**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **KappaSense Ltd**
**2017900 Misgav (IL)**

(72) Inventors:
• **IVANOV, Nick,**
**Affula (IL)**
• **SCALY, Ori**
**Hasollelim (IL)**
• **KILUNOV, Boris**
**Karmiel (IL)**

(74) Representative: **Pfenning, Meinig & Partner mbB**
**Patent- und Rechtsanwälte**
**An der Frauenkirche 20**
**01067 Dresden (DE)**

(54) **CODED SCALE CAPACITIVE ENCODER**

(57) A capacitive absolute scale (21) for a linear encoder includes a plurality of spaced-apart capacitors (30, 32) each of identical width and encoding a binary bit of a first value. A space between any two successive capacitors encodes a known number of binary bits each having a second value opposite to the first value, a width of the space corresponding to a cumulative width of an equal number of capacitors. A concatenation of respective binary bits for all capacitors and spaces from the origin point to any selected location in the scale encodes a binary word having a value that uniquely encodes a length from the origin point to the selected location. Preferably the binary bits across a complete length of the scale conform to a de Bruijn sequence. Also disclosed are an absolute linear encoder (40) and a decoding algorithm for use with the absolute scale.

Fig. 2

**Description**

**FIELD OF THE INVENTION**

This invention relates to multi-channel capacitive absolute position linear encoders having coarse and fine scales.

**BACKGROUND OF THE INVENTION**

Linear encoders may be incremental or absolute. Incremental linear encoders provide a measure of movement relative to an initial position, whereas absolute encoders measure absolute movement relative to a coordinate based on a known origin. An incremental movement does not take the origin into consideration. In practice, absolute linear encoders have an absolute scale and multiple incremental scales, somewhat akin to a Vernier scale wherein the absolute measurement points to a specific incremental scale, which provides an accurate incremental displacement relative to a known absolute location of an origin of the incremental scale relative to a known origin or zero point of the absolute scale.

Although the present invention relates specifically to a scale for an absolute linear encoder, since preferred embodiments of the invention require integration of absolute and incremental linear encoders, we will describe prior art that relates to both types of encoders. In doing so, it will be understood that the relevant background is intended to obviate the need to describe known features of either type of encoder and is thus to be regarded in all respects as part of the detailed description with regard to features that, while essential to providing a fully enabling description, are nevertheless not themselves part of the invention.

U.S. Patent No. 4,429,307 discloses the broad principles of an incremental capacitive linear encoder comprising a moving plate having conductive areas separated by a sine wave shaped gap. A fixed plate is disposed adjacent and parallel to the moving plate and supports a pair of conductive transmitter elements that overlie the conductive portions of the moving plate. Antiphase drive signals Asin cot and -Asin cot are connected to the respective transmitter elements. Between the transmitter elements there are located a plurality of conductive rectangular receiver bars on the fixed plate that overlie the sine wave shaped gap. The receiver bars are spaced so that their centers are one-quarter wavelength apart and are connected to output leads, with the output of every fourth bar being tied together.

In operation, the antiphase drive signals to the transmitter elements are capacitively coupled to the conductive areas of the moving plate. The areas of the transmitter elements are equal thus ensuring that the varying capacitance between them and the respective conductive areas of the moving plate, depends only on the variations in the respective areas as determined by the position of the sinusoidal gap relative to any particular receiver bar. Specifically, opposing ends of each receiver bar form a pair of capacitors with respective areas of the moving plate on opposite sides of the sinusoidal gap, the respective drive voltages being applied across the two capacitors thus formed. In each group of four successive receiver bars, the output of each receiver bar is a function of the respective capacitance 'seen' by the two antiphase voltages applied to opposite sides of the bar.

The amplitude of the output signal from each receiver bar is modulated by the sinusoidal gap and encodes where the center of the receiver bar intersects the sinusoidal gap. The output signals are processed to remove noise, the resultant amplitude serving to encode the lateral displacement of the moving plate relative to the receiver bar. By employing multiple groups of receiver bars wherein corresponding bars in each group are connected in parallel, errors are averaged, and overall accuracy is improved. Since each receiver bar is spaced apart from its neighbor by one-quarter of the cycle, in each series of four receiver bars, the odd-numbered bars produce outputs having phase differences of 0° and 180° relative to the drive signals, while the even-numbered bars produce outputs having phase differences of 90° and 270° relative to the drive signals. The outputs of the two odd-numbered bars are fed to a first differential amplifier while the outputs of the two even-numbered bars are fed to a second differential amplifier. Each differential amplifier removes noise that is common to both inputs and produces an output whose amplitude is twice that of the respective inputs. However, since respective input signals to the two differential amplifiers have a phase-difference of 90°, the output of the first differential amplifier follows a sine wave while that of the other differential amplifier follows a cosine wave. The two outputs are demodulated to remove the high frequency drive signals so that the instantaneous demodulated outputs are 90° out-of-phase signals of equal amplitude defining a vector whose angular displacement indicates where the center of each receiver bar intersects the sinusoidal gap of the moving plate.

Although in U.S. Patent No. 4,429,307 amplitude of the output signal from each receiver bar is modulated by a sinusoidal gap, more generally, the required modulation can be achieved using a pattern of known periodic structure.

U.S. Patent No. 6,492,911 discloses a multi-channel absolute capacitive linear encoder which employs the above-described principles but uses a coarse scale and a fine scale constituting a pair of stationary elements coupled to a stationary object, and a read head, coupled to the moving object. The coarse scale comprises a printed circuit board on which there are etched equally spaced-apart conductive bars that extend from one end of the scale to the other and through which there is etched a gap in the shape of a sine wave having only one period that likewise extends across the complete length of the scale. A periodic (time-modulated) electrostatic field is transmitted by a transmitter plate, which is preferably on the stationary element, but may alternatively be on the moving element. An electrically active pattern on one of the elements, typically on the moving element, modulates the envelope of the time-modulated electrostatic field responsive to motion of the moving object. Processing circuitry senses the modulated electrostatic field and analyzes the envelope modulation to determine the position of the moving object.

In such a multi-channel encoder, instead of only a single scale as is provided in U.S. Patent No. 4,429,307, there are provided at least two scales, one of which is coarse while the other is fine although they are typically formed on a common substrate. The sensing elements for each scale may be optical, magnetic or capacitive but the present invention is directed solely to capacitive linear encoders and therefore only capacitive encoders will be discussed.

As noted above, the coarse track has only one period along the whole scale, the mechanical length of the period being defined by the scale length. The fine track on the other hand is a series of repetitive patterns used for higher resolution. During absolute position detection, a readhead first detects the coarse track electrical angle that points towards a fine index, and then the electrical angle of the fine track is calculated and added to a known position of the index forming an absolute position.

U.S. Patent No. 6,742,275 discloses a scale for an absolute position optical linear encoder, the scale including a track in which graduation areas of identical width and different optical properties are alternatingly arranged. First, second and third graduation areas with different optical properties are arranged in the track, a first logical signal being assigned to a first combination of two successive different graduation areas, and a second logical signal being assigned to a second different combination of two successive different graduation areas. It is stated that such an encoding regimen avoids problems associated with commonly used Manchester encoding and allows absolute position to be determined using only a single track.

In this context it should be noted that absolute position linear encoders commonly use a combination of a coarse absolute scale and multiple cascaded fine incremental scales. In capacitive encoders each fine incremental position scale includes a plurality of equally spaced capacitive elements of the kind described in above-mentioned U.S. Patent No. 4,429,307 and provides a fine-resolution incremental distance measurement over a defined narrow range of the complete scale. The coarse absolute scale extends over the full range of the scale and operates to provide a coarse measurement of distance relative to a known origin, which also establishes the origin for a first in the series of incremental scales. Thus, at any given location of the read head consequent to movement along the track, the read head establishes the coarse absolute distance from the origin. This coarse distance is mapped to a corresponding fine incremental scale that allows for computation of an accurate measurement of distance along the incremental scale relative to an initial edge of the scale. Since all the incremental scales are of identical known width, the distance of this initial edge from the origin of the whole scale is easily computed and to this is added the measured distance along the currently read incremental scale.

The measurement accuracy of an absolute position linear encoder for an encoder of given length depends on the accuracy of each incremental encoder and on the accuracy with which the coarse scale points to the correct incremental encoder. As explained above, incremental encoders produce a pair of conjugate sine and cosine signals that represent a rotating vector whose angle from 0° to 360° indicates the incremental distance from the readhead to the leading edge of the encoder. It is helpful therefore to relate to linear length in terms of angular displacement.

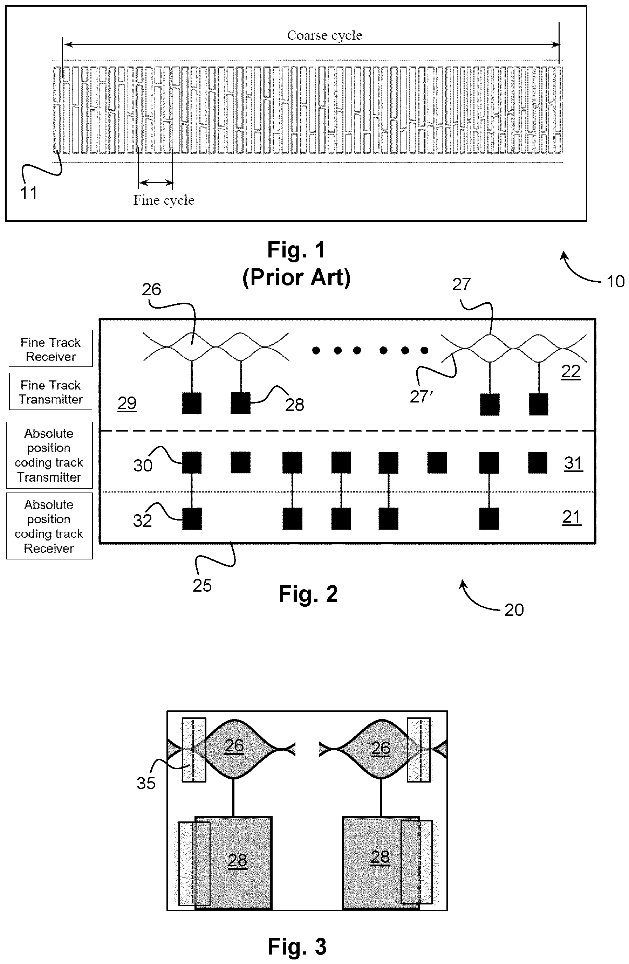

Fig. 1 shows schematically a prior art coarse absolute position capacitive scale 10 of the kind described in above-mentioned US Pat. No. 6,492,911, comprising a plurality of evenly spaced-apart elements 11 forming capacitor plates that are intersected by a pair of sinusoidal gaps that are out of phase by 90°. In use, two adjacent columns overlap the readhead at any given location thus allowing reading from four capacitive elements to which respective sinusoidal drive signals Asin ωt, Acos ωT, -sin ωt and -Acos ωt are applied. The scale 10 spans the effective length of a linear encoder, which has a series of incremental encoder scales each mapped to a unique subset of the elements of the absolute position encoder.

Such an arrangement is capable of providing position detection over a limited detection range, whose length is defined by the ratio of coarse/fine error limits as described by the following equations:
The relation between position and electrical angle given by:

$$L = \frac{(\theta \pm \varepsilon) * CL}{360}$$

Where:

L     = measured coarse position + electrical error in meters

CL     = total length of scale pattern in meters

$\theta$　　= electrical angle in degrees

$\varepsilon$　　= coarse electrical error in degrees

The fine period angular step of the coarse encoder given by:

$$\alpha = 360 \times \frac{FL}{CL}$$

Where:

$\alpha$　　= fine track period length in coarse degrees

$CL$　　= total length of scale pattern in meters

$FL$　　= fine period pattern in meters

Position detection is possible as long as position error is smaller than the allowed limit. For the capacitive encoder, the maximal error given by:

$$|\varepsilon| < \frac{\alpha}{2}$$

Where:

$\varepsilon$ =　　coarse electrical error in degrees
$\alpha$ =　　fine track period length in coarse degrees

As the ratio of coarse/fine grows, the coarse error limit $\left(\frac{\alpha}{2}\right)$ falls below the coarse electric degrees error ($\varepsilon$), which makes position detection impossible. In effect this establishes a practical limit to the length of the linear encoder.

We can express this pictorially by observing that the coarse absolute scale maps the complete linear scale to an angular deviation from 0° to 360° such that the position on the coarse absolute scale that crosses the readhead points to the fine incremental encoder. The use of a sinusoidal gap as proposed in the above-mentioned prior art encoders requires that the crossing point or angular displacement of the sinusoidal with the readhead be properly determined. As the length of the absolute scale increases, the angular displacement corresponding to any given distance along the scale decreases and eventually is not measurable with sufficient accuracy to allowing mapping to a unique incremental encoder.

This drawback has been addressed in the art of optical encoders. For example, J. T. M. Stevenson et al., "Absolute Position Measurement Using Optical Detection of Coded Patterns" J. Phys. E. Sci. Instrum. 21 (1988), pp. 1140 to 1145, which proposes an absolute scale using Manchester coding.

U.S. Patent No. 6,742,275 discloses a scale suitable for an absolute position determination, which includes a track in which graduation areas of identical width and different optical properties are alternatingly arranged. At least first, second and third graduation areas with different optical properties that are arranged in the track, wherein a first logical signal is assigned to a first combination of two successive different graduation areas, and a second logical signal is assigned to a second different combination of two successive different graduation areas.

However, in the art of capacitive encoders, known absolute scales are currently limited by length as explained above. There appears to be no suggestion in the prior art to provide an absolute scale for a capacitive encoder that accurately and uniquely encodes any location along the scale regardless of the length of the scale.

## SUMMARY OF THE INVENTION

It is therefore an object of the present invention to provide a scale for an absolute linear capacitive encoder that addresses the above-mentioned drawbacks.

To this end there is provided in accordance with one aspect of the invention a capacitive scale for encoding incremental length relative to a known origin point along a continuum of unlimited length, wherein the scale comprises a plurality of spaced-apart capacitors each having capacitance of a magnitude that encodes a binary bit and wherein a concatenation of respective binary bits for all capacitors from the origin point to any selected capacitor in the scale encodes a binary word having a value that uniquely encodes a length from the origin point to the selected capacitor.

Such a scale provides a non-repetitive absolute position-coding capacitive track with capacitive repetitive tracks allowing for absolute position detection in a harsh environment over unlimited distance with low manufacturing costs.

**BRIEF DESCRIPTION OF THE DRAWINGS**

In order to understand the invention and to see how it may be carried out in practice, embodiments will now be described, by way of non-limiting example only, with reference to the accompanying drawings, in which:

**Fig. 1** is a schematic representation of a conventional coarse absolute position capacitive scale;
**Fig. 2** shows schematically a scale according to the invention having absolute and incremental capacitive components;
**Fig. 3** shows pictorially an enlarged detail of the incremental encoder and associated analog coupling line;
**Fig. 4** is part of a 13-bit de Bruijn sequence showing how movement between successive bits defines different and unique13-bt words;
**Fig. 5** shows pictorially six possible spatial dispositions of the bit reader relative to pads in the data line;
**Fig. 6** shows schematically the capacitive coupling corresponding to each of the six arrangements shown in Fig. 5;
**Fig. 7** shows schematically a data track reading circuit;
**Fig. 8** shows graphically the relationship between measured voltage and the logic state of the corresponding bit in the digital data line;
**Fig. 9** shows schematically a digital coding coupling reading circuit between a Read head and a Scale;
**Fig. 10** shows pictorially the spatial disposition between the sinusoidal contact areas in the scale and the four capacitive plates in the readhead through which excitation signals are fed to the incremental encoders;
**Fig. 11** shows pictorially a detail of an absolute position encoder having a readhead and analog and digital scales according to an embodiment of the invention;
**Figs. 12a, 12b and 12c** are a flow chart showing an algorithm according to the invention for decoding the digital code of the coarse absolute scale;
**Fig. 13** shows pictorially a detail of a scale for an absolute position encoder having coarse, medium and fine scales;
**Fig. 14** shows pictorially a partial detail of a passive coded scale for an absolute position encoder having an absolute scale and multiple incremental scales;
**Fig. 15** shows pictorially a partial detail of an active reader for use with the scale of Fig. 14;
**Fig. 16** shows an exemplary de Bruijn sequence associated with the absolute digital scale;
**Fig. 17** shows schematically the overlap between the reader and the scale; and
**Fig. 18** shows pictorially the overlap between the reader and the scale.

**DETAILED DESCRIPTION OF EMBODIMENTS**

Since capacitive linear encoders are well-known in the art, we will refrain from a detailed description of those features that are not specifically related to the invention. As is known, an absolute encoder consists of three subsystems:

**Absolute Scale:** This is the geometric scale along which absolute position is measured from a known origin, typically defined by a stationary part of a machine on which the encoder is mounted.
**Readhead:** This moves along the scale and defines a reference point whose position along the bar is measured at any given moment. The readhead contains electronics that communicate with the scale and "reads" an electrical signal that encodes the absolute location of the reference point.
**Decoder:** This is coupled to and may be integrated with the readhead and decodes the signal to derive the absolute position of the readhead along the scale relative to the origin. The decoder can be part of or separate from the scale and executes a decoding algorithm, that uniquely maps the readhead signal to a unique incremental encoder.

Fig. 2 shows schematically a capacitive scale 20 according to the invention having an absolute digital scale 21 and an incremental analog scale 22 having a plurality of electrically conductive spatially varying cyclic patterns of equal period. The digital and analog scales constitute respective channels of a two-channel capacitive absolute position linear encoder. As noted later, there may be additional intermediate analog channels. A readhead (not shown) moves along the scale in at least one direction and, at any given position along the scale, receives two capacitive signals allowing determination of the absolute distance along the scale from a known origin point. The analog scale 22 is etched on a printed circuit board (PCB) 25 forming a substrate on to which the elements of the analog and digital scales are etched. The length of the PCB 25 determines the maximum absolute distance from the original that can be measured; but unlike known capacitive encoders this length is unlimited. It can be one meter or ten meters or even longer since, as will be explained, the absolute digital scale will point accurately to a unique cycle of the incremental encoder regardless of its length. The incremental scale may comprise a continuous series of sinusoidal conductive areas 26 etched on to the PCB 25 as shown in enlarged detail in Fig. 3. As the readhead moves along the scale, a series of transmitters transmit respective excitation signals of equal amplitude but each separated in phase by 90°. These signals can be represented as Asin ωt, Acos ωT, -sin ωt and -Acos ωt and are capacitively coupled to the conductive areas 26, each via conductive strips in the readhead that serve as one plate of a respective capacitor that overlaps the conductive area 26 by an area that depends on the instantaneous position of the readhead. Consequently, as the readhead moves up and down the scale, the area of overlap through which each of the transmitter signals is conveyed is modulate by the sinusoidal conductive area 26, so that the received signal from each transmitter is a function of the position of the readhead along the incremental scale.

Each of the conductive areas 26 is connected to a respective conductive pad 28 that is likewise etched on the PCB. Complementary analog pads in the readhead are aligned with the pads 28, so that as the readhead moves up and down the scale, it capacitively couples a number of the pads 28. The incremental encoder operates as explained above with reference to the prior art to provide what is nominally the same incremental distance relative to its respective origin. In practice, several cycles of the same position are measured and averaged by feeding them in parallel to the readhead. The pads 28 thus serve as an analog coupling line 29 by means of which the readhead capacitively couples a specific cycle of the incremental encoder. Vertically aligned with each of the pads 28 in the analog coupling line 29 are complementary pads 30 of a digital coupling line 31, by means of which digital pads in the readhead capacitively couple respective pads 32 in the absolute digital scale 21. Consequently, the pitch of the analog pads is identical to that of the digital pads. It will be appreciated that the terms "digital pad" and "analog pad" are used to identify the functionality of the respective pads in the readhead since they both operate in similar manner to allow capacitive coupling to the absolute scale and to an incremental scale whose origin is defined by the position decoded by the absolute scale.

Although there is an equal number of aligned pads in the analog coupling line 29 and the digital coupling line 31, not all the pads 30 in the digital coupling line 31 have a counterpart pad 32 in the absolute digital scale 21. The pads 30 form plates of respective capacitors by means of which the readhead receives a signal via the connected pad 32, when present. In such case, the readhead will register a binary bit "1". If there is no pad connected to the digital coupling line 31, the readhead will register a binary bit "0". Thus, the absolute scale encodes a continuous series of binary bits that extend across the full length of the scale and allow the readhead to determine its absolute position along the scale.

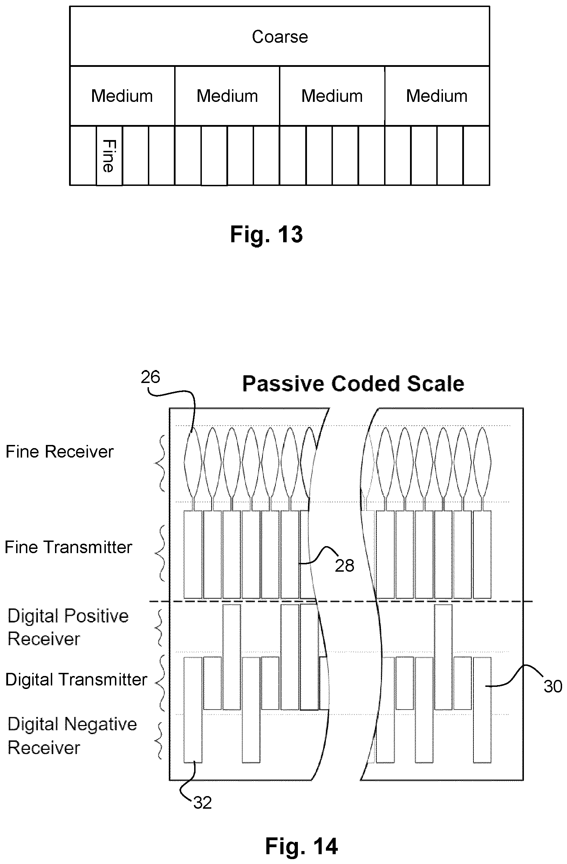

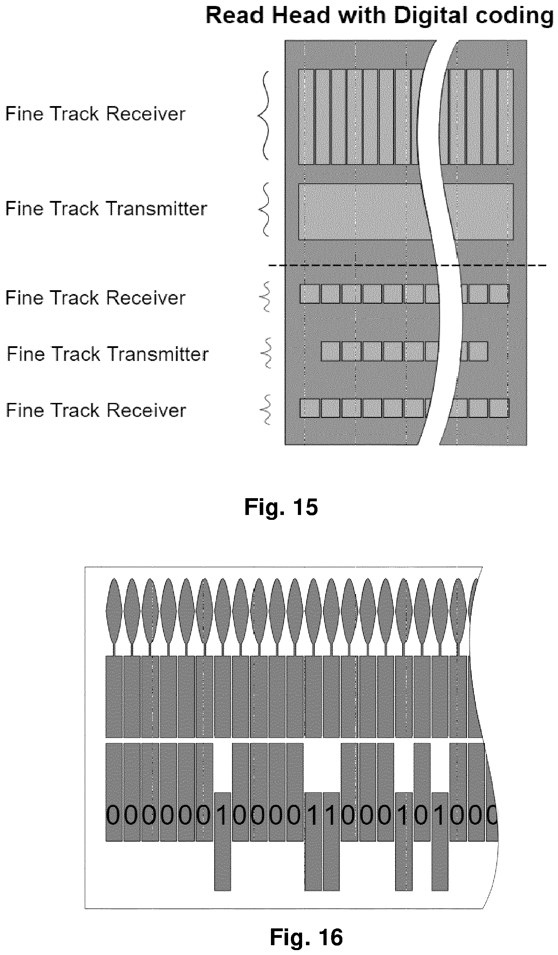

Figs. 2 and 3 are schematic and for the sake of clarity, more detailed drawings are shown in Figs. 14 to 18, to which brief reference will be made. Thus, Fig. 14 is a partial schematic representation showing a detail of the absolute digital scale 31. It is seen that the sinusoidal patterns of the fine receiver are elongated and commonly coupled to tracks that correspond to the pads 28 of Fig. 2 and which extend periodically along the complete length of the scale. In other words, each of the sinusoidal patterns and its connected track is located the same distance apart from its immediate neighbors and there are no missing elements. It is difficult to understand the layout of the transmitter and receiver tracks 30, 32 without reference to the readhead, a partial detail of which is shown pictorially in Fig. 15.

It is seen that the readhead includes two sets of tracks, which are etched in a PCB. Of these tracks, the upper tracks constitute fine tracks for the incremental encoder and the lower tracks constitute coarse tracks for the absolute encoder. The coarse tracks, whose arrangement and implementation constitute a principal feature of the invention are described in detail below. Each of the fine tracks comprises:

- a transmitter constituted by a periodic set of rectangular conductive pads each transmitting a different signal phase Asin ωt, Acos ωT, -sin ωt and -Acos ωt

- a receiver which consists of a single conductive area that extends along the length of the readhead in a direction parallel to the longitudinal axis of the scale 31

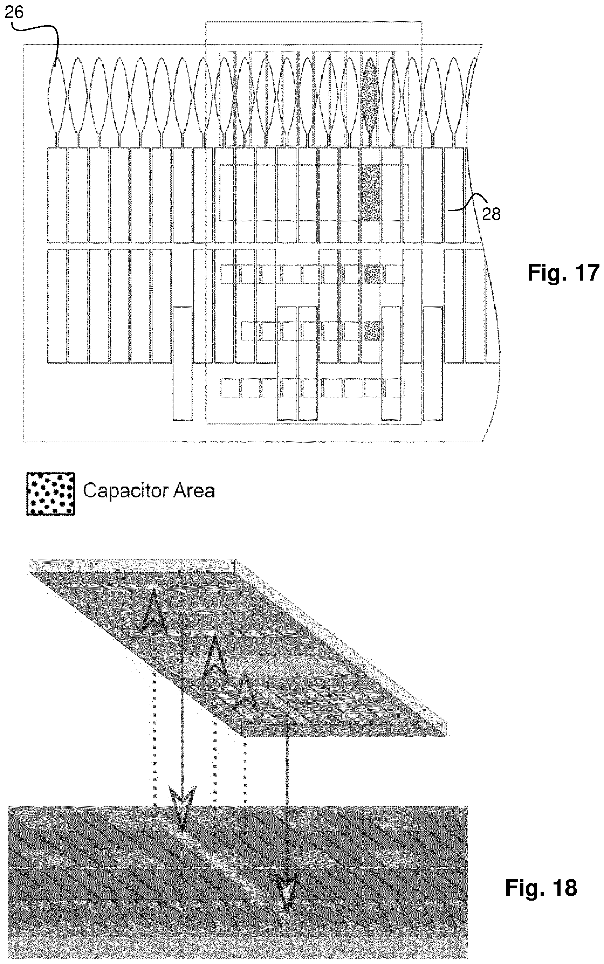

It will be recalled that the fine track transmitter and receiver form part of the incremental encoder. In fact, the length of the readhead accommodates several incremental encoder cycles. Thus, as seen in Fig. 17, each of the fine transmitters intersects a part of sinusoidal pattern in cycles of 4 in order to maintain the same overlap area for each phase (Asin ωt, Acos ωT, sin ωt and Acos ωt) along the readhead. The electrical coupling between the fine tracks of the receiver and the respective sinusoidal pattern is shown pictorially for a single transmitting element in Fig. 18 where it is seen that the transmitter signal passes via the elongated track in the readhead through the sinusoidal pattern.

A principal feature of the invention resides in the implementation of the absolute scale so that at any position of the readhead, the readhead reads a predetermined number of bits which together form a word that uniquely encode the position of the readhead.

Although well-known in the art of digital encoders, for the sake of completeness the invention makes use of the following terms:

"Bit" - a bit is a binary logic signal that can have values of "1" or "0". A bit is realized on the scale by the presence of a metal pad in the row of bits, in which case it has a value of "1" or the absence of a pad when it has a value of "0".
"Bit Reader" - is the part of the readhead circuit whose task is to measure the value of the bit below it on the scale.
"Word" - is a sequence of bits of a fixed length. The value of a word is determined by the binary sequence of bits. The bits in the word are arranged in ascending order from left to right with the most significant bit (MSB) being the leftmost bit. For example the word 1010101101001 consists of 13 bits and has a decimal value of 5481.
"de Bruijn sequence" - is a non-spaced sequence of a known length of symbols that retains the following attribute: for a fixed length word the symbols in the sequence are arranged so that each word appears only once. In our case the symbols are bits equal to "1" or "0" and the number of bits allocated to each unique word is computed to provide a unique mapping to each cycle of the incremental encoder along the complete length of the scale. The number of bits in the de Bruijn sequence is determined according to the number of distinct words that must be obtained from the complete sequence.

In general for an alphabet comprising two symbols $A\{0, 1\}$, the number of unique $k$-bit words that can be formed is equal to $B(k) = 2^k$. However, this assumes that the de Bruijn sequence is cyclic i.e. that the symbols at the end of the sequence can be wrapped round to the start of the sequence to form what is commonly termed a "necklace", so that, for example, for the 8-bit de Bruijn sequence $\{0\ 0\ 0\ 1\ 0\ 1\ 1\ 1\}$ we can form 8 unique 3-bit words as follows: $\{000\}, \{001\}, \{010\}, \{101\}, \{011\}, \{111\}, \{110\}, \{100\}$

However, in the invention, when applied to a linear scale of finite length whose end cannot wrap round to the beginning, the last two words $\{110\}, \{100\}$ cannot be realized. In general, it can be shown that the number of $k$-bit unique words $B(k)$ formed of binary bits $\{0, 1\}$ for a linear unwrapped scale will be equal to $B(k) = 2^k - (k - 1)$. In the simple example above, where $k = 3$, this gives six non-cyclic unique words, as previously noted.

Thus $B(k) = 2^k - (k - 1)$ determines the number of incremental encoder cycles required to achieve the desired accuracy since each cycle of the incremental encoder translates an angular measurement to a distance increment from the origin of the respective encoder. Each cycle of the incremental encoder must be uniquely identified by a corresponding substring $B(k)$. The length $k$ of the string must be such that it is possible to extract this number of unique substrings; so for an alphabet having only two symbols $\{0, 1\}$, $k$ determines the number of pads in the digital coupling line. The position of the first bit of the substring $B(k, n)$ along the length of the scale is typically used to identify the substring and is mapped to one specific cycle of the incremental encoder whose start position is known and whose increment thus allows the determination of absolute position of the readhead.

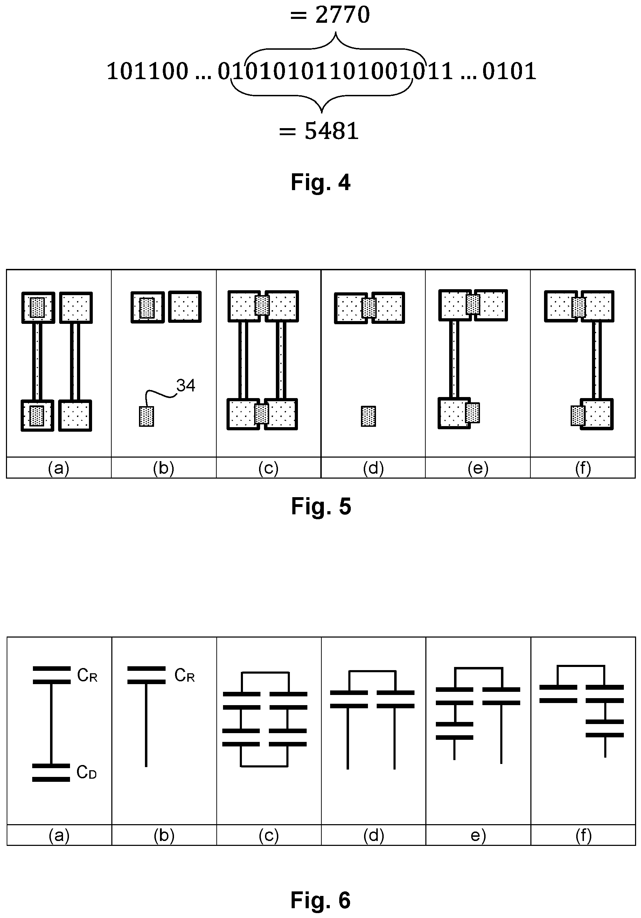

Fig. 4 shows part of a de Bruijn sequence used in an absolute position linear encoder according to an embodiment of the invention having a length of 5m to encode $2^{13}$ - 12 (i.e. 8,192 - 12=8,180) unique 13-bit words. It is seen that a shift of one bit to the right along the de Bruijn sequence produces two unique words translating to $5481_{10}$ and $2770_{10}$. The presence or absence of conductive pads 32 in the absolute position encoder 21 thus conforms to the required de Bruijn sequence. The actual derivation of the de Bruijn sequence is not a feature of the invention, it being well-known in the field of combinatorial mathematics and well-documented on-line such. However, for the sake of completeness, reference may be made to Joe Sawada et al "A surprisingly simple de Bruijn sequence construction" in Discrete Mathematics 339 (2016) 127-131.

"Absolute" digital position - is the position along the absolute digital scale 21 corresponding to a specific bit in the de-Bruijn sequence. Therefore, the value of each word provides a one-to-one mapping of the absolute position on the bar. Typically, the MSB in each de-Bruijn sequence defines the absolute digital position corresponding to the respective sequence. However, it could equally well be any other bit since all bits have the same pitch and therefore each bit has a known offset from the first bit.

"Analog" relative position - is a position within a cycle of the incremental encoder corresponding to the relative position within the local sinusoidal region of the reference point corresponding to the instantaneous position of the readhead. The measurement is a continuous measurement whose accuracy defines the accuracy of the bar. The relative measurement does not allow discrimination regarding the identity of the incremental encoder cycle currently located under the readhead, but only its relative position within the incremental encoder cycle, and is therefore called an "analog" relative reading.

"Analog" absolute position - a combination of the information obtained from measuring the "digital" (and absolute) position and measuring the "analog" relative position, providing the absolute position of the reference point along the entire scale.

Position detection of the Fine or the Coarse tracks is based on an electrical signal from a charge amplifier circuit. The electrical signal of a charge amplifier is proportional to the capacitance generated between the bit reader in the readhead and the scale. This capacitance may be modeled by a capacitor plate having an area A. The upper plate is in the bit reader of the readhead and is located at a fixed distance d from the lower plate in the scale. The effective capacitance is a function of the area of overlap between the capacitor plate in the readhead and that in the scale. This is true for both the absolute digital and incremental analog encoders, but the present discussion relates only to the absolute digital encoder. It should be noted that this remains true even if the distance d changes because cosine and sine signals are affected by the same factor as a result of which the electrical angle will not change for the analog incremental encoders.

Thus, with reference to Fig. 5 there are tabulated six possible spatial dispositions of the bit reader relative to the pads labelled (a) to (f), the equivalent capacitive circuits corresponding to each of these situations being shown in Fig. 6 where $C_R$ denotes the capacitor in the bit reader and $C_D$ denotes the capacitor in the data line. Thus, in both figures, columns (a) and (b) depict the straightforward situation wherein a capacitive contact 34 of the bit reader lies completely within the pad on the scale, such that the capacitive contact 34 fully overlaps the pad. In (a), the pad in the coupling line is connected to a pad in the data line such that there is capacitive coupling from the data line to the bit reader, and the bit is decoded by the bit reader as logic "1". Since in (b) there is no pad in the data line, there is no capacitive coupling from the data line to the bit reader, and the bit is decoded by the bit reader as logic "0". Columns (c) and (d) depict the situation wherein the capacitive contact 34 of the bit reader straddles two neighboring pads on the scale. Since the width of the bit reader is smaller than the width of the pads and larger than the space between neighboring pads, the cumulative overlap in (c) between the bit reader and the two neighboring pads, while slightly less than the complete overlap depicted in (a) and (b), still provides sufficient capacitive coupling from the data line to the bit reader that this bit will also be decoded by the bit reader as logic "1". Likewise, since in any case the two neighboring pads in (d) have no counterpart pads in the data line, the bit is decoded by the bit reader as logic "0".

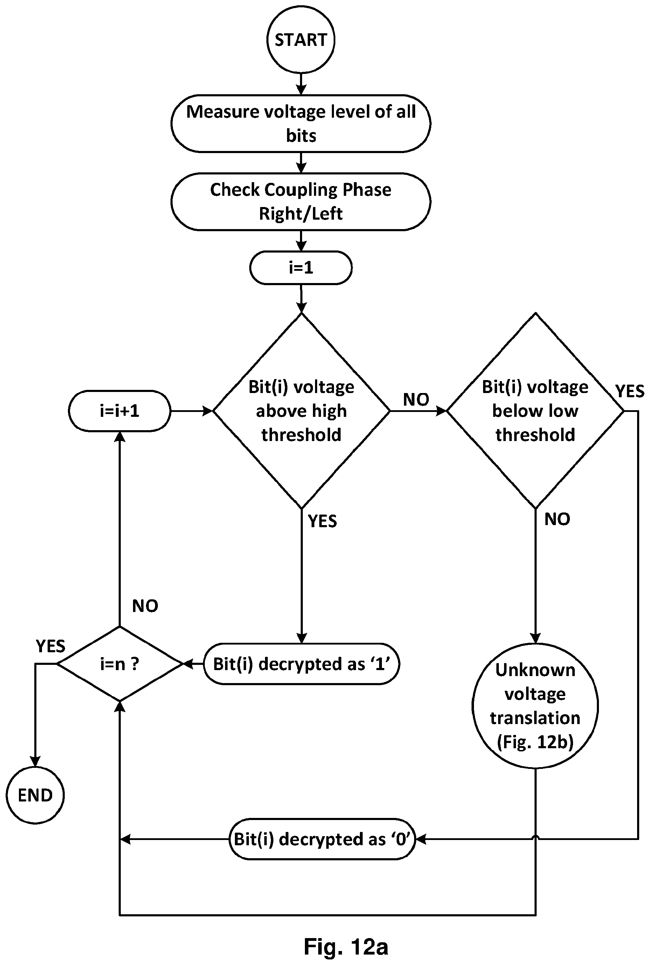

Columns (e) and (f) depict complementary situations wherein neighboring bits in the data line are "10" and "01" respectively, and the capacitive contact 34 of the bit reader only partially overlaps the pad in the data line corresponding to the logic "1" state. The problem here is that since the area of overlap determines the capacitive coupling, the reading is indeterminate, the bit value being resolved by an algorithm that is described in detail below with reference to Figs. 12a to 12c of the drawings.

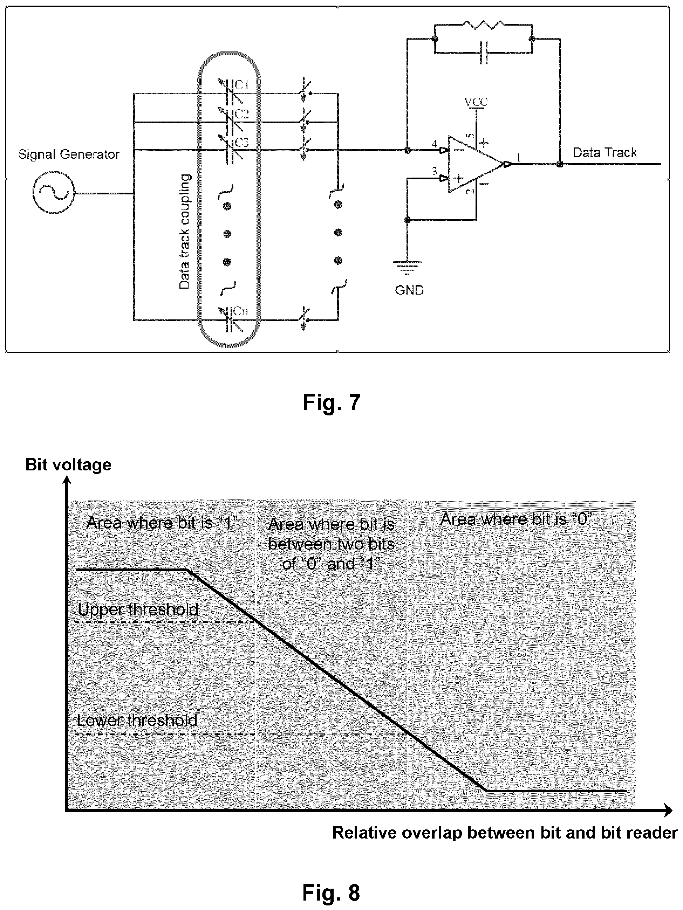

Fig. 7 shows schematically a data track reading circuit for reading the digital scale. A signal generator feeds a sinusoidal voltage via a series of variable capacitors (representing bits) shown as C1, C2 ... Cn via a multiplexer that cyclically couples each of the capacitor output voltages to an integrator, which operates as a charge amplifier whose output voltage is proportional to the capacitance C1, C2 ... Cn. Consequently, the output voltage is a function of the capacitance between the contact 34 in the bit reader and the data pad in the digital data line.

Fig. 8 shows graphically the relationship between measured voltage and the logic state of the corresponding bit in the digital data line. Depending on the degree of overlap between the capacitor plates in the readhead and the scale, three areas of voltage can be distinguished as follows:

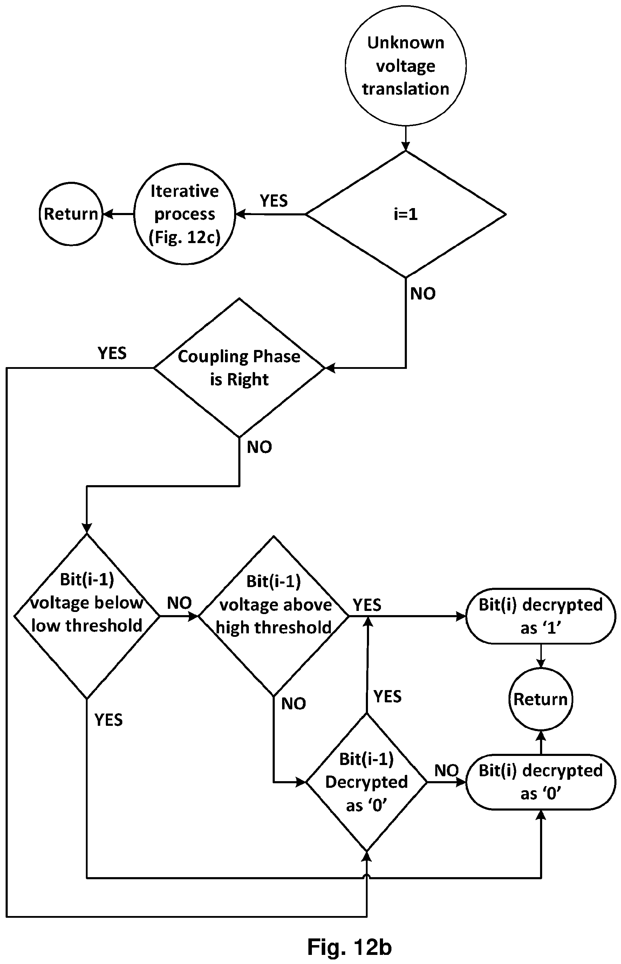

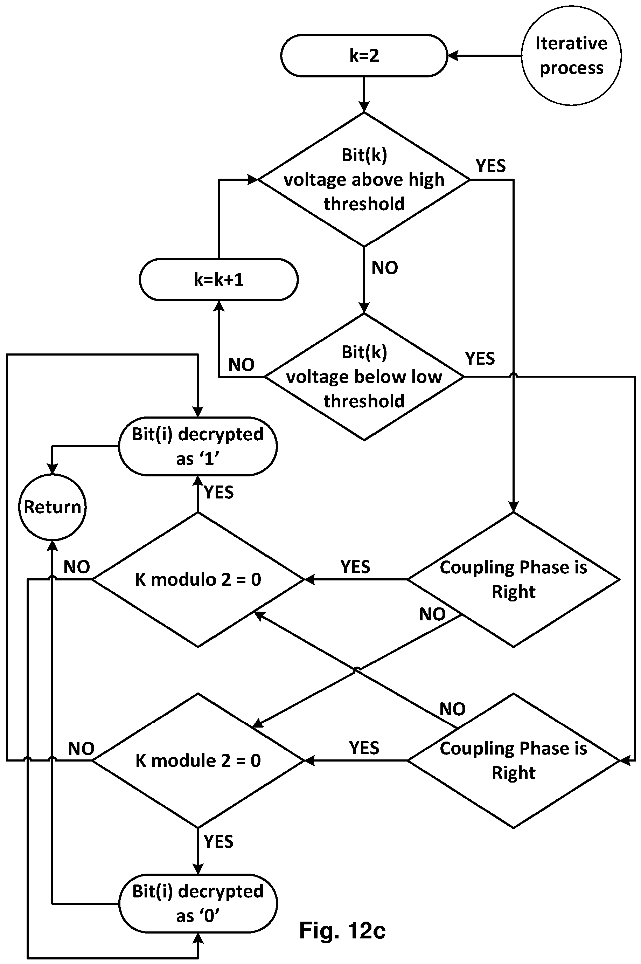

**High voltage range:** the voltage measured by the bit reader is above a defined upper voltage threshold. If a voltage is measured in this range, it can be said with certainty that the value of the bit below the bit reader is "1".
**Low voltage range:** the voltage measured by the bit reader is below a defined lower voltage threshold. If a voltage is measured in this range, it can be said with certainty that the value of the bit below the bit reader is "0".
**Medium voltage level:** the voltage measured by the bit reader lies between the lower and upper voltage thresholds. In this range the value of the bit, based only on the voltage measurement, is indeterminate although it is known with certainty that the position of the bit reader is between a bit valued "0" and a bit valued "1". This follows from columns (e) and (f) in Fig. 5. With reference to Figs. 12a, 12b and 12c, there will be described an algorithm according to the invention that allows absolute determination of a bit for which the measured voltage

Fig. 8 shows graphically the relationship between measured voltage and the logic state of the corresponding bit in the digital data line.

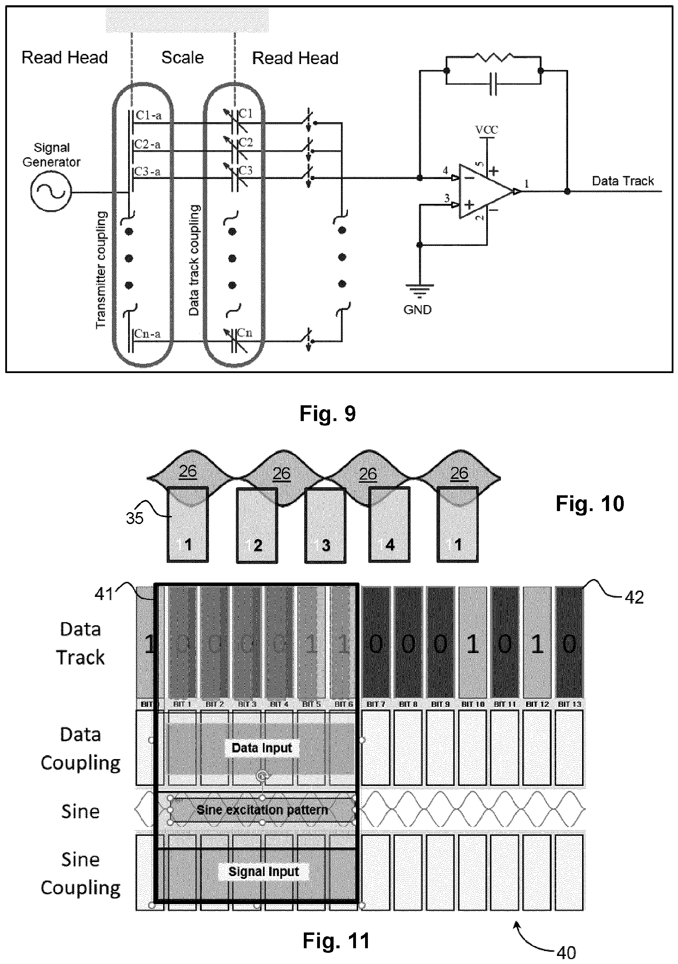

Fig. 9 shows schematically reading circuit. The circuit is similar that shown in Fig. 7 with the addition of the capactive transmitter coupling, by means of which the excitation signals in the readhead are fed to the scale. In such an arrangement the transmitters are part of an 'active' readhead and the scale is passive.

Fig. 10 shows pictorially the spatial disposition between the sinusoidal contact areas in the scale and the four capactive plates in the readhead through which excitation signals are fed to the incremental encoder. The readhead includes multiple groups of spaced-apart capacitive contacts each having four contacts 35, numbered 1 to 4 and each transmitting a phase shifted signal (Asin ωt, Acos ωT, -sin ωt and -Acos ωt). Each of the conductive areas 26 forms a cycle of an analog incremental encoder and the four out-of-phase excitation signals are fed to respective capacitive contacts 35 in each group, while the respective contacts in each group are connected in parallel so that respective contacts in each group intersect a different cycle of the incremental encoder. As is known in the art, as the readhead moves up and down the scale, the capacitive contacts 35 sweep the incremental encoder and their respective areas of overlap with the associated incremental encoder cycle changes. Consequently, the capacitance between the four contacts 35 in each group and the respective conductive area 26 changes and the output voltages corresponding to each contact are commonly amplified by a charge amplifier and directed to two identical channels to provide respective sine and cosine outputs, which provide an instantaneous angular displacement of the readhead relative to a fixed origin of the incremental encoder cycle, typically corresponding to where the phase of the sinusoidal envelope is 0°.

The way in which incremental displacement of the readhead is decoded is well known in the art and so is not explained in further detail. It will be appreciated that different spatial dispositions of the four contacts in the readhead and the conductive areas 26 corresponding to the incremental encoder are possible, the arrangement shown in Fig. 10 being by way of example only. It will also be understood that theoretically, only a single group of four contacts is required to apply the four excitation signals, since respective contacts in each group should intersect the associated cycle of the incremental encoder at the same angle. But in practice, multiple groups allow for averaging the results and improving overall accuracy. Since the readhead must be sufficiently long to accommodate all the contacts for the digital line, there is, in any case, sufficient space to provide several groups of contacts for the analog line. The readhead circuit is built on a PCB on to which the contacts for both the analog and digital lines are etched, the respective contacts in the multiple groups of analog contacts being connected in parallel by means of respective conductive tracks etched on the PCB.

Fig. 11 shows pictorially a detail of an absolute position encoder 40 comprising a readhead 41 and a scale 42 having analog and digital tracks according to an embodiment of the invention. The readhead 41 has contacts 35 as shown in Fig. 10 for reading the analog scale and contacts

Figs. 12a, 12b and 12c are a flow chart showing an algorithm according to the invention for decoding the digital code of the coarse absolute scale. As noted previously, the respective voltages of all digital data bits are read by the corresponding pads 30 in the digital data line. Although the pitch of the pads 30 is the same as the pitch of the capacitive contacts 34 in the readhead (shown in Fig. 5 and 17), at any given postion of the readhead 41 relative to the scale 42, the capacitive contacts 34 in the readhead may effect full or only partial overlap with pads 32 in the digital data line; and, of course, there will be overlap at all where pads are omitted from the digital data line because the associated logic bit is "0".

The algorithm proceeds as follows. First, the respective voltages from each of the capacitive contacts 34 in the readhead are read for an instantaneous stationary position of the readhead. For the sake of absolute clarity, in an active readhead, an AC excitation signal is transmitted via a first contact to a contact in the scale from which it is then returned to a second contact in the readhead as shown at Fig. 18. So in such a case, the readhead must have two associated contacts for respectively transmitting and receiving the excitation signals. However, for ease of explanation we make no distinction between these contacts and will relate to contacts 34 as if they both transmit and receive the excitation signals. It should be noted that in Fig. 18 the ends of all arrows denoting their origin are marked with a diamond shape; and their points indicate their destination. It is thus clear that data is communicated between the readhead and the scale via respective elements that are mutually collinear in the plane of the readhead and mutually collinear in the plane of the scale while the respective elements in the readhead and scale are mutually aligned vertically.

For each measured voltage, the coupling phase in the analog coupling line is also determined. Coupling phase is the incremental encoder angle, which is determined by the position of excitation lines 35 over the fine receiver 26, the angle being divided into two regions, which will be referred to as the left overlap and the right overlap, respectively. Thus, we will refer to an angle <180° as left overlap and ≥180° as right overlap.

The bits, denoted by Bit($i$), are processed iteratively starting with the first bit i.e. the MSB, Bit(1). If the voltage measured for this bit is above the upper threshold (shown in Fig. 8), the bit is decrypted as "1". Conversely, if the measured voltage is below the lower threshold (shown in Fig. 8), the bit is decrypted as "0". In both cases, the algorithm checks whether all n-bits of the word have been decrypted ($i=n$). If so, the complete word is known, and the decryption is complete. Otherwise, the pointer i is incremented, and the cycle is repeated for the next bit Bit($i$+1). The above loop relates to the straightforward cases where the measured voltage for a bit allows its binary value to be determined without further processing.

However, when the measured voltage is between the upper and lower thresholds (shown in Fig. 8), the logic state of the bit cannot be stated with certainty. The algorithm first checks whether this is the first bit i.e. the MSB in the word i.e. Bit(1). If it is not the first bit, then the value of the first bit is known with certainty, and the value assigned to the current bit is determined according to Table 1 below:

**Table: 1:** First stage recursion for determining value of indeterminate bit

| Analog Phase | Voltage of preceding bit | Decoded value of preceding bit | Value of current bit |
|---|---|---|---|
| Right overlap | Above upper threshold | Not relevant | 1 |
| | Below lower threshold | Not relevant | 0 |
| | Indeterminate | 1 | 0 |
| | | 0 | 1 |

(continued)

| Analog Phase | Voltage of preceding bit | Decoded value of preceding bit | Value of current bit |
|---|---|---|---|
| Left overlap | Not relevant | 1 | 0 |
| | Not relevant | 0 | 1 |

Alternatively, if the indeterminate bit is the first bit in the word, a recursive process is initiated whereby the respective values of successive bits are read until the value of a bit "0" or "1" can be determined with certainty. Unequivocal determination of such a bit is possible only if two successive bits both have the same value "0" or "1" and it is for this reason that the algorithm requires that the word cannot comprise a bit combination in which every successive 2-tuple i.e. subset of two bits comprises bits of opposite value and for all of which tuples the same bits appear in the same order. Once such a bit is found, the algorithm returns preceding bits each of opposite value to its immediate successor until we reach the first bit whereupon the value assigned to the first bit is determined in accordance with the phase of the analog signal. Thus, in the case where the contact 35 in the readhead overlaps the analog cycle 26 creating a right coupling, corresponding to column (e) in Fig. 5, a bit for which the current value is "1" is assigned "0". Conversely, in the case where the contact 35 in the readhead overlaps the analog cycle 26 creating a left coupling, corresponding to column (f) in Fig. 5, a bit for which the current value is "1" is assigned "1".

By way of example Table 2 shows the process for the word "1010101101001" when the upper and lower voltage thresholds are 160 and 140 and the readhead location corresponds to a right overlap. The table requires only seven iterations because, since the 7th and 8th bits are both "1", the contact in the bit reader corresponding to the 7th bit will right overlap the seventh contact in the digital line and will left overlap the eighth contact in the digital line. The cumulative overlap of both these digital contacts results in the measured voltage exceeding the upper threshold, allowing the algorithm to establish unequivocally that the 7th bit is "1".

Table: 2: First stage recursion for determining value of indeterminate bit

| Iteration No. | 1 | 2 | 3 | 4 | 5 | 6 | 7 |
|---|---|---|---|---|---|---|---|
| Bit voltage | 152 | 148 | 152 | 148 | 152 | 148 | 300 |
| Forward cycle | Not known: check next bit | Not known: check next bit | Not known: check next bit | Not known: check next bit | Not known: check next bit | Not known: check next bit | Bit is "1" |
| Reverse cycle | Receive "0" Return "1" | Receive "1" Return "0" | Receive "0" Return "1" | Receive "1" Return "0" | Receive "0" Return "1" | Receive "1" Return "0" | "1" |

This is shown in Fig. 12c where, starting from the second bit, i.e. Bit($k$) where k=2, we check whether Bit($k$) is above the upper threshold. If so, it is unambiguously "1". If the coupling phase is right corresponding to column (e) in Fig. 5, we check whether $k$Mod2=0. If not, $k$ is odd meaning that two successive bits have been analyzed.

The algorithm then repeats the process for the next bit until all 13 bits of the word (of which only six are shown in the figure) are determined.

Having determined the complete word, its value is input to a look up table which maps each unique word to the establish start position of a corresponding cycle of the incremental encoder, to which the incremental offset of the incremental encoder is then added to determine the final absolute position of the readhead.

With further reference to Figs. 12a, 12b and 12c, the algorithm for decoding the measured voltage levels for each bit (i) of the de Bruijn sequence is as follows:

(a) conveying a voltage from the readhead through all capacitive elements in both the absolute scale and the incremental scales that are within a reading area of the readhead and receiving back from the absolute and incremental scales respective received voltage levels, wherein the voltage levels received from each of the capacitive elements in the absolute readhead indicate a binary value "0" or "1" for the respective binary bit encoded by each capacitive element;

(b) measuring the received voltage levels;

(c) for each bit of the capacitive elements in the absolute scale overlapping the readhead, determining whether the measured voltage exceeds a predetermined high threshold or is less than a predetermined low threshold and, if so, decoding the respective bit as logic "1" or "0" and proceeding iteratively to successive bits in the code; and

**(d)** for an indeterminate bit for which the measured voltage is neither higher than the high threshold nor lower than the low threshold determining whether to assign logic "1" or "0" based on a measured coupling phase corresponding to an instantaneous location of the readhead within the incremental encoder cycle.

With particular reference to Fig. 12c, it is seen that if the indeterminate bit(*i*) is the first bit (MSB) of the code then determining whether to assign logic "1" or "0" to the indeterminate bit(*i*) comprises:

i) if the measured voltage for a current bit *k* exceeds the low threshold but is less than the high threshold, proceeding to the next bit *k* where *k=k+1*;
ii) if *k* is even and the measured voltage for a current bit *k* exceeds the high threshold and the incremental encoder points towards the start of the of a cycle (i.e. coupling phase is left); OR
iii) if *k* is even and the measured voltage for a current bit *k* is less than the low threshold and incremental encoder points towards end of cycle (i.e. coupling phase is right);
then evaluating bit i as logic "0";
iv) if *k* is even and the measured voltage for a current bit *k* exceeds the high threshold and incremental encoder points towards end of a cycle (i.e. coupling phase is right); OR
v) if *k* is even and the measured voltage for a current bit *k* is less than the low threshold and the incremental encoder points towards the start of the of a cycle (i.e. coupling phase is left);
then evaluating bit i as logic "1".
vi) if *k* is odd and the measured voltage for a current bit *k* exceeds the high threshold and the incremental encoder points towards the start of the of a cycle (i.e. coupling phase is left); OR
vii) if *k* is odd and the measured voltage for a current bit *k* is less than the low threshold and incremental encoder points towards end of a cycle (i.e. coupling phase is right);
then evaluating bit i as logic "1";
viii) if *k* is odd and the measured voltage for a current bit *k* exceeds the high threshold and incremental encoder points towards end of a cycle (i.e. coupling phase is right); OR
ix) if *k* is odd and the measured voltage for a current bit *k* is less than the low threshold and the incremental encoder points towards the start of the of a cycle (i.e. coupling phase is left);

then evaluating bit i as logic "0".

With particular reference to Fig. 12b, it is seen that if the indeterminate bit(i) is not the first bit (MSB) of the code then determining whether to assign logic "1" or "0" to bit (i) comprises:

**(a)** if the incremental encoder points towards the start of the of a cycle (i.e. coupling phase is left) then:

i) if the measured voltage for a preceding bit (*i-1*) is less than the low threshold then evaluating bit (i) as logic "0";
ii) if the measured voltage for the preceding bit (*i-1*) is higher than the high threshold then evaluating bit (i) as logic "1";
iii) if the measured voltage for a preceding bit (*i-1*) is less than the high threshold but not less than the low threshold and the preceding bit (*i-1*) was decrypted as logic "0" then evaluating bit (i) as logic "1";
iv) if the measured voltage for a preceding bit (*i-1*) is less than the high threshold but not less than the low threshold and the preceding bit (*i-1*) was decrypted as logic "1" then evaluating bit (i) as logic "0".

**(b)** if the incremental encoder points towards end of cycle (i.e. coupling phase is right) then:

i) if the preceding bit (*i-1*) was decrypted as logic "0" then evaluating bit (i) as logic "1";
ii) if the preceding bit (*i-1*) was decrypted as logic "1" then evaluating bit (i) as logic "0".

It will be appreciated that while a particular embodiment of the invention has been described, many features may be varied without departing from the principles of the invention. Thus, in an alternative implementation, the look up table can map the unique word to a sequential number of the corresponding cycle of the incremental encoder starting from the origin of the linear encoder. Since the width of each cycle of the incremental encoder is the same, the known width can be multiplied by the number assigned by the algorithm to the cycle of the incremental encoder under the readhead to establish the absolute start position of this cycle of the incremental encoder.

It will also be understood that while the incremental encoder as described has a sinsusoidal pattern, as is well-known in the art, it may be constituted by any suitable cyclic pattern of identical period to a pitch of the spaced-apart capacitors of the absolute scale. In one aspect, the incremental encoder serves to provide an accurate high resolution offset relative to a known reference point of the incremental encoder as known *per se*. But in another aspect that is unique to the present invention, the coupling angle at which the readhead intersects the incremental encoder serves to assign a logic value to an otherwise indeterminate bit in the word sequence of the absolute encoder.

Thus, in a further aspect of the invention there is provided an absolute capacitive encoder having a coarse absolute scale and a multi-cycle analog incremental encoder and a readhead that at any instantaneous position along the absolute scale determines a respective multi-bit binary word sequence that uniquely identifies a cycle of the incremental encoder while at the same time a coupling angle at which the readhead intersects the incremental encoder serves to assign a logic value to an otherwise indeterminate bit in the word sequence of the absolute encoder.

Likewise, while the principle of the invention has been described with reference to a coarse scale that maps to a single fine scale comprising multiple incremental encoder cycles, there may be occasions when the linear encoder is so long that there are too many fine encoder cycles to facilitate accurate incremental measurements. In this case, there may be provided one or more intermediate scales as shown in Fig. 13 of medium resolution. In this case, the coarse absolute scale points to an accurately determined medium scale whose incremental measurement allows a corresponding fine incremental encoder cycle to be determined.

It should also be noted that the capacitance, C, of a parallel plate capacitor is given by:

$$C = \varepsilon \cdot \frac{A}{d}$$

$\varepsilon$ is the absolute permittivity of the dielectric material being used,
A is the area of the parallel plates, and
*d* is the separation between the plates.

Thus, although the invention has been described with particular regard to changes in capacitance due to variations in overlap, the principles of the invention are applicable to determining changes in capacitance due to variations in dielectric material or between the plates. So the two logic states represented as "0" and "1" can be encoded by spaced apart capacitances having dielectric materials of different absolute permittivity or by using a stepped configuration where the plates in the scale representing a first logic state are arranged at a different height to those representing a second logic state.

Also as mentioned earlier, although the invention has been described with particular reference to a linear encoder having an active readhead in conjunction with a passive scale, the same principles may be applied for use with an active scale in conjunction with an active readhead or to a combination of active scale and active readhead.

It will also be understood that the algorithm according to the invention is typically a computer program implemented by a suitably programmed computer or processing unit. The invention also contemplates a machine-readable memory tangibly embodying a program of instructions executable by the machine for executing the algorithm.

It should also be noted that features that are described with reference to one or more embodiments are described by way of example rather than by way of limitation to those embodiments. Thus, unless stated otherwise or unless particular combinations are clearly inadmissible, optional features that are described with reference to only some embodiments are assumed to be likewise applicable to all other embodiments also.

**Claims**

1. A capacitive scale (21) for encoding absolute length relative to a known origin point along a continuum of unlimited length, wherein the scale comprises a plurality of spaced-apart capacitors (30, 32) each having capacitance of a magnitude that encodes a binary bit and wherein a concatenation of respective binary bits for all capacitors from the origin point to any selected capacitor in the scale encodes a binary word having a value that uniquely encodes a length from the origin point to the selected capacitor.

2. The capacitive scale according to claim 1, wherein each capacitor encodes a binary bit of a first value and a space between successive capacitors encodes one or more binary bits of a second value opposite to the first value.

3. The capacitive scale according to claim 1, wherein some of the capacitors have a first dielectric material and encode binary bits of a first value and others of the capacitors have a second different dielectric material and encode binary bits of a second value opposite to the first value.

4. The capacitive scale according to claim 1 or 3, wherein some of the capacitors have opposing plates spaced apart by a first distance and encode binary bits of a first value and others of the capacitors have opposing plates spaced apart by a second different distance and encode binary bits of a second value opposite to the first value.

5. A capacitive scale (20) for encoding absolute length relative to a known origin point along a continuum of unlimited length, wherein:

the scale comprises a plurality of spaced-apart capacitors (30, 32) each of identical width and encoding a binary bit of a first value,
a space between any two successive capacitors encodes a known number of binary bits each having a second value opposite to the first value, a width of the space corresponding to a cumulative width of an equal number of capacitors, and
a concatenation of respective binary bits for all capacitors and spaces from the origin point to any selected location in the scale encodes a binary word having a value that uniquely encodes a length from the origin point to the selected location.

6. The capacitive scale according to any one of claims 1 to 5, wherein the respective binary bits across a complete length of the scale conform to a de Bruijn sequence.

7. A multi-channel capacitive absolute position linear encoder (40) having a readhead (41) configured to measure absolute distance from an origin of the readhead to an origin of the linear encoder, said linear encoder comprising:

an absolute scale (20) corresponding to any one of claims 1 to 6, and
an incremental encoder comprising a plurality of electrically conductive spatially varying cyclic patterns of identical period to a pitch of the spaced-apart capacitors of the absolute scale and having a shape that modulates voltage conveyed from the readhead to respective ones of said patterns overlapping the readhead, all of which patterns span a length of the linear encoder and are configured so that the absolute scale provides a coarse measurement of distance which identifies a respective reference point of a specific cycle of the incremental encoder;
whereby the absolute distance from the origin of the readhead to the origin of the linear encoder is equal to a known or computed absolute distance from the reference point of the specific incremental encoder to the origin of the linear encoder plus an incremental offset from the reference point of the incremental encoder to the origin of the readhead.

8. The capacitive absolute position linear encoder according to claim 7, wherein the absolute scale (21) comprises a plurality of spaced-apart capacitors (30, 32) each having capacitance of a magnitude that encodes a binary bit and wherein a concatenation of respective binary bits for all capacitors from the origin point of the linear encoder to any selected capacitor in the scale encodes a binary word having a value that uniquely encodes a length from the origin point to the selected capacitor conforming to a de Bruijn sequence.

9. A capacitive absolute position linear encoder (40) having a coarse absolute scale (21) and a multi-cycle analog incremental encoder (22) and a readhead (41) that at any instantaneous position along the absolute scale determines a respective multi-bit binary word sequence encoded by capacitive elements (30, 32), said word sequence uniquely identifying a respective cycle of the incremental encoder while at the same time a coupling angle at which the readhead intersects the incremental encoder serves to assign a logic value to an otherwise indeterminate bit in the word sequence of the absolute encoder.

10. A method for decoding an instantaneous position of the readhead in the capacitive absolute position linear encoder according to claim 8 or 9, the method comprising:

(a) conveying a voltage from the readhead through all capacitive elements in both the absolute scale and the incremental scales that are within a reading area of the readhead and receiving back from the absolute and incremental scales respective received voltage levels, wherein the voltage levels received from each of the capacitive elements in the absolute readhead indicate a binary value "0" or "1" for the respective binary bit encoded by each capacitive element;
(b) measuring the received voltage levels;
(c) for each bit of the capacitive elements in the absolute scale overlapping the readhead, determining whether the measured voltage exceeds a predetermined high threshold or is less than a predetermined low threshold and, if so, decoding the respective bit as logic "1" or "0" and proceeding iteratively to successive bits in the code; and

**(d)** for an indeterminate bit for which the measured voltage is neither higher than the high threshold nor lower than the low threshold determining whether to assign logic "1" or "0" based on a measured coupling phase corresponding to an instantaneous location of the readhead within the incremental encoder cycle.

11. The method according to claim 10, wherein the indeterminate bit(i) is the first bit (MSB) of the code and determining whether to assign logic "1" or "0" to the indeterminate bit(i) comprises:

i) if the measured voltage for a current bit $k$ exceeds the low threshold but is less than the high threshold, proceeding to the next bit $k$ where $k=k+1$;
ii) if $k$ is even and the measured voltage for a current bit $k$ exceeds the high threshold and the incremental encoder points towards the start of the of a cycle (i.e. coupling phase is left); OR
iii) if $k$ is even and the measured voltage for a current bit $k$ is less than the low threshold and incremental encoder points towards end of cycle (i.e. coupling phase is right);
then evaluating bit i as logic "0";
iv) if $k$ is even and the measured voltage for a current bit $k$ exceeds the high threshold and incremental encoder points towards end of cycle (i.e. coupling phase is right); OR
v) if $k$ is even and the measured voltage for a current bit $k$ is less than the low threshold and the incremental encoder points towards the start of the of a cycle (i.e. coupling phase is left);
then evaluating bit i as logic "1".
vi) if $k$ is odd and the measured voltage for a current bit $k$ exceeds the high threshold and the incremental encoder points towards the start of the of a cycle (i.e. coupling phase is left); OR
vii) if $k$ is odd and the measured voltage for a current bit $k$ is less than the low threshold and incremental encoder points towards end of cycle (i.e. coupling phase is right);
then evaluating bit i as logic "1";
viii) if $k$ is odd and the measured voltage for a current bit $k$ exceeds the high threshold and incremental encoder points towards end of cycle (i.e. coupling phase is right); OR
ix) if $k$ is odd and the measured voltage for a current bit $k$ is less than the low threshold and the incremental encoder points towards the start of the of a cycle (i.e. coupling phase is left);
then evaluating bit i as logic "0".

12. The method according to claim 10, wherein the indeterminate bit (i) is not the first bit (MSB) of the code and determining whether to assign logic "1" or "0" to bit (i) comprises:

(a) if the incremental encoder points towards the start of the of a cycle (i.e. coupling phase is left) then:

i) if the measured voltage for a preceding bit $(i-1)$ is less than the low threshold then evaluating bit (i) as logic "0";
ii) if the measured voltage for the preceding bit $(i-1)$ is higher than the high threshold then evaluating bit (i) as logic "1";
iii) if the measured voltage for a preceding bit $(i-1)$ is less than the high threshold but not less than the low threshold and the preceding bit $(i-1)$ was decrypted as logic "0" then evaluating bit (i) as logic "1";
iv) if the measured voltage for a preceding bit $(i-1)$ is less than the high threshold but not less than the low threshold and the preceding bit $(i-1)$ was decrypted as logic "1" then evaluating bit (i) as logic "0".

(b) if the incremental encoder points towards end of a cycle (i.e. coupling phase is right) then:

i) if the preceding bit $(i-1)$ was decrypted as logic "0" then evaluating bit $(i)$ as logic "1";
ii) if the preceding bit $(i-1)$ was decrypted as logic "1" then evaluating bit $(i)$ as logic "0".

13. A computer program product comprising a computer-readable memory storing program code instructions, which when executed on a computer processing unit carry out the method according to any one of claims 10 to 12.

Coarse cycle

11

Fine cycle

# Fig. 1
# (Prior Art)

26    27    10

| Fine Track Receiver |

| Fine Track Transmitter |

29    28    27'    22

| Absolute position coding track Transmitter |

30    31

| Absolute position coding track Receiver |

32    21

25

# Fig. 2

20

35

26    26

28    28

# Fig. 3

$$= 2770$$

$$101100 \ldots 0\overbrace{10101011010010}11 \ldots 0101$$

$$= 5481$$

**Fig. 4**

| (a) | (b) | (c) | (d) | (e) | (f) |
|---|---|---|---|---|---|

**Fig. 5**

| (a) | (b) | (c) | (d) | e) | (f) |
|---|---|---|---|---|---|

**Fig. 6**

**Fig. 7**

**Fig. 8**

**Fig. 9**

**Fig. 10**

**Fig. 11**

START

Measure voltage level of all bits

Check Coupling Phase Right/Left

i=1

Bit(i) voltage above high threshold

NO →

Bit(i) voltage below low threshold

YES

i=i+1

YES ↓

Bit(i) decrypted as '1'

NO

i=n ?

YES

END

NO

Unknown voltage translation (Fig. 12b)

Bit(i) decrypted as '0'

**Fig. 12a**

19

Unknown voltage translation

i=1

YES → Iterative process (Fig. 12c) → Return

NO

Coupling Phase is Right

YES

NO

Bit(i-1) voltage below low threshold

NO → Bit(i-1) voltage above high threshold

YES → Bit(i) decrypted as '1'

YES

YES

Bit(i-1) Decrypted as '0'

NO → Bit(i) decrypted as '0'

NO

Return

**Fig. 12b**

Fig. 12c

| Coarse | | | |
|---|---|---|---|
| Medium | Medium | Medium | Medium |
| Fine | | | |

**Fig. 13**

**Passive Coded Scale**

Fine Receiver

Fine Transmitter

Digital Positive Receiver

Digital Transmitter

Digital Negative Receiver

26
28
30
32

**Fig. 14**

## Read Head with Digital coding

Fine Track Receiver

Fine Track Transmitter

Fine Track Receiver

Fine Track Transmitter

Fine Track Receiver

**Fig. 15**

00000010000110001010000

**Fig. 16**

26

28

**Fig. 17**

Capacitor Area

**Fig. 18**

Europäisches
Patentamt

European
Patent Office

Office européen
des brevets

# EUROPEAN SEARCH REPORT

**Application Number**

**EP 22 16 0161**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 451 447 B2 (MITSUBISHI ELECTRIC RES LABORATORIES INC ET AL) 22 October 2019 (2019-10-22) | 1-6 | INV. G01D5/241 |
| Y | * abstract; claims 1,2,3,12 * * figures 1,5a-5d,6a,6b,8a,8b,9a,10a,11,13,14 * * column 12 * ----- | 7-13 | |
| X | US 2016/102998 A1 (ROMER ET AL) 14 April 2016 (2016-04-14) | 1-6 | |
| Y | * abstract; figure 10 * * pages 10,15 * ----- | 7-13 | |
| Y | WO 2020/031041 A1 (ARAS RICHARD) 13 February 2020 (2020-02-13) * abstract; figure 1 * * paragraphs [0015], [0029] * ----- | 7-13 | |

TECHNICAL FIELDS
SEARCHED      (IPC)

G01D

The present search report has been drawn up for all claims

| Place of search | Date of completion of the search | Examiner |
|---|---|---|
| Munich | 2 August 2022 | Barthélemy, Matthieu |

EPO FORM 1503 03.82 (P04C01)

## ANNEX TO THE EUROPEAN SEARCH REPORT
## ON EUROPEAN PATENT APPLICATION NO.

EP 22 16 0161

This annex lists the patent family members relating to the patent documents cited in the above-mentioned European search report.
The members are as contained in the European Patent Office EDP file on
The European Patent Office is in no way liable for these particulars which are merely given for the purpose of information.

02-08-2022

| Patent document cited in search report | | Publication date | Patent family member(s) | | Publication date |
|---|---|---|---|---|---|
| US 10451447 | B2 | 22-10-2019 | CN | 111566448 A | 21-08-2020 |
| | | | JP | 6880319 B2 | 02-06-2021 |
| | | | JP | 2020537749 A | 24-12-2020 |
| | | | US | 2019204120 A1 | 04-07-2019 |
| | | | WO | 2019135325 A1 | 11-07-2019 |
| US 2016102998 | A1 | 14-04-2016 | DE | 102013104782 A1 | 13-11-2014 |
| | | | EP | 2994722 A1 | 16-03-2016 |
| | | | US | 2016102998 A1 | 14-04-2016 |
| | | | WO | 2014180614 A1 | 13-11-2014 |
| WO 2020031041 | A1 | 13-02-2020 | CN | 112585645 A | 30-03-2021 |
| | | | DE | 112019003940 T5 | 01-07-2021 |
| | | | EP | 3834173 A1 | 16-06-2021 |
| | | | GB | 2576164 A | 12-02-2020 |
| | | | US | 2021383085 A1 | 09-12-2021 |
| | | | WO | 2020031041 A1 | 13-02-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4429307 A
- US 6492911 B
- US 6742275 B

**Non-patent literature cited in the description**

- **J. T. M. STEVENSON et al.** Absolute Position Measurement Using Optical Detection of Coded Patterns. *J. Phys. E. Sci. Instrum.,* 1988, vol. 21, 1140-1145
- **JOE SAWADA et al.** *Discrete Mathematics,* 2016, vol. 339, 127-131